# EUROPEAN PATENT APPLICATION

(11) **EP 4 661 587 A1**
(43) Date of publication of application: **10.12.2025**
(21) Application number: 25180064.5
(22) Date of filing: 02.06.2025
(51) Int. Cl.: H04W 76/12, H04L 12/14, H04L 41/5003

(54) **PREPARATION OF A COMMUNICATION SESSION**

(30) Priority: 06.06.2024 FI 20245721
(71) Applicant: Telia Company AB, 169 94 Solna (SE)
(72) Inventor: JALKANEN, Tero, 04300 TUUSULA (FI); SARAJISTO, Tomi, 00790 HELSINKI (FI)
(74) Representative: Berggren Oy

(57) **Abstract**

A method for preparing a communication session between a first subscriber (120, 130) and a second subscriber (120, 130) at least by selecting a network slice of a mobile communication network (140) to the first subscriber (120, 130) for the communication session is provided, the method comprises: receiving a request to establish the communication session; generating, based on data descriptive of the communication session, a resource request to select the network slice for the first subscriber (120, 130); and generating, in response to a receipt of data indicative of the network slice, a message to the first subscriber (120, 130), the message indicating the network slice selected to the first subscriber (120, 130) for the communication session with the second subscriber (120, 130). Also a server device (110) and a computer program are provided.

## Description

### TECHNICAL FIELD

The invention concerns in general the technical field of telecommunications. More particularly, the invention concerns a setup of a communication session.

### BACKGROUND

Setting up a communication connection in modern mobile communication networks having so-called slicing architecture is based on an approach in which one or more predefined slices are assigned to certain applications or services. In this approach the network capability and the user requirements through applications or services are aimed to be matched statically. This is of course a simple and straightforward approach, but it does not fit for all purposes, such as communication in network resource critical applications like computer gaming and similar.

### SUMMARY

The following presents a simplified summary in order to provide basic understanding of some aspects of various invention embodiments. The summary is not an extensive overview of the invention. It is neither intended to identify key or critical elements of the invention nor to delineate the scope of the invention. The following summary merely presents some concepts of the invention in a simplified form as a prelude to a more detailed description of exemplifying embodiments of the invention.

An object of the invention is to present a method, a server device and a computer program for preparing a communication session.

The objects of the invention are reached by a method, a server device and a computer program as defined by the respective independent claims.

According to a first aspect, a method for preparing a communication session between a first subscriber and a second subscriber at least by selecting a network slice of a mobile communication network to the first subscriber for the communication session is provided, the method, performed by a server device, comprises:
receiving a request to establish the communication session between the first subscriber and the second subscriber,
generating, based on data descriptive of the communication session, a re-source request to a network node of the mobile communication network to select the network slice for the first subscriber,
generating, in response to a receipt of data indicative of the network slice, a message to the first subscriber, the message indicating the network slice selected to the first subscriber for the communication session with the second subscriber.

Further, the method may comprise:
requesting, from another network node of the mobile communication network, data descriptive of communication resources of the first subscriber and the second subscriber in response to the receipt of the request to establish the communication session between the first subscriber and the second subscriber, and
generating, based on the data descriptive of the communication resources of the first subscriber and the second subscriber, a request to the network node to adjust communication policies of the first subscriber and the second subscriber to meet each other in a predefined accuracy for the communication session over the selected slice.

Still further, the method may also comprise:
receiving data indicative of a termination of the communication session,
generating a further request to the network node to return the communication policies of the first subscriber and the second subscriber to those that were active prior to the adjustment of the communication policies.

According to a second aspect, a server device is provided, the server device is configured to execute the steps of the method according to the first aspect as defined above.

According to a third aspect, a computer program is provided, the computer program comprising instructions to cause the server device according to the second aspect as defined above to execute the steps of the method according to the first aspect as defined above.

The expression "a number of" refers herein to any positive integer starting from one, e.g. to one, two, or three.

The expression "a plurality of" refers herein to any positive integer starting from two, e.g. to two, three, or four.

Various exemplifying and non-limiting embodiments of the invention both as to constructions and to methods of operation, together with additional objects and advantages thereof, will be best understood from the following description of specific exemplifying and non-limiting embodiments when read in connection with the accompanying drawings.

The verbs "to comprise" and "to include" are used in this document as open limitations that neither exclude nor require the existence of unrecited features. The features recited in dependent claims are mutually freely combinable unless otherwise explicitly stated. Furthermore, it is to be understood that the use of "a" or "an", i.e. a singular form, throughout this document does not exclude a plurality.

### BRIEF DESCRIPTION OF FIGURES

The embodiments of the invention are illustrated by way of example, and not by way of limitation, in the figures of the accompanying drawings.
Figure 1 illustrates schematically some entities being involved according to an example.
Figure 2 illustrates schematically a method according to an example.
Figure 3 illustrates schematically a network environment according to an example.
Figure 4 illustrates schematically a flow chart according to an example.

### DESCRIPTION OF THE EXEMPLIFYING EMBODIMENTS

The specific examples provided in the description given below should not be construed as limiting the scope and/or the applicability of the appended claims. Lists and groups of examples provided in the description given below are not exhaustive unless otherwise explicitly stated.

The invention provides a solution for preparing a communication session between a first subscriber and a second subscriber at least by selecting a network slice of a mobile communication network to the first subscriber for the communication session wherein the network slice refers to a logical network that provides specific network capabilities and network characteristics, supporting various service properties for network slice customers. In other words, the preparation of the communication session comprises a selection of a slice of a mobile communication network, such as a slice of a 5G or 6G network, which is suitable for the communication session, such as for a gaming session of multiple players over communication network(s). The preparation of the communication session may also comprise further operations, such as an adjustment of communication policies of one or more users represented with subscriptions in the mobile communication networks in a manner as is described in the forthcoming description.

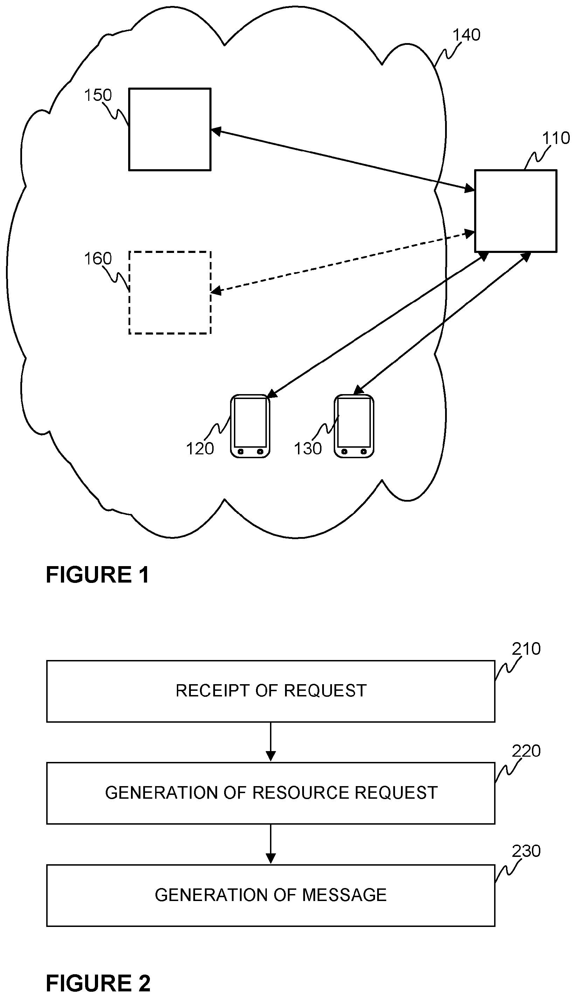

Next, at least some aspects of the invention are described by referring to Figure 1 that schematically illustrates some entities being involved in the implementation of the invention. In accordance with the invention a server device 110 is harnessed to orchestrate the preparation of the communication session between a first subscriber 120 and a second subscriber 130 in a manner described in the forthcoming description. The communication session itself may also be managed and/or hosted by the server device 110, or by another server device or similar. For example, the communication session may be a computer gaming session or a teleconference session or anything similar wherein the communication session is hosted and maintained by another operational entity than the one preparing the communication session. These two functionalities may naturally be executed by the same device wherein at least two separate processes are executed. In relation to the preparation of the communication session the server device 110 is communicatively connected either directly or indirectly to one or more network nodes of a mobile communication network 140. In accordance with the invention the server device 110 is communicatively connected to a network node 150 that is managing allocation of network resources, such as network slices, to various communication needs. Such a network node 150 may e.g. be a Policy Control Function, PCF, in the 5G mobile communication network. In accordance with some embodiments of the invention the server device 110 may be communicatively connected also to other network nodes, wherein at least one such other network node 160 may be an entity that is able to perform analysis of the network based on various types of data accessible by the entity. Such an entity may e.g. be a Network Data Analytics Function, NWDAF, in the 5G mobile communication network. For sake of clarity it is worthwhile to mention that even if Figure 1 schematically illustrates that the first and the second subscriber 120, 130 are directly communicatively connected to the server device 110, they naturally utilize the communication channels, and, thus, the network elements of the mobile communication network 140, or networks, in order to communicatively reach the server device 110. Moreover, for avoidance of doubt it is worthwhile to mention that the term subscriber in the context of the present invention refers to a party that is served by a mobile communication network 140 and it may consist at least of a terminal device and a subscription of the mobile communication network 140 in the terminal device, such as a SIM card, in a known manner.

Next, at least some aspects of the invention are described by referring to Figure 2. Figure 2 illustrates schematically an example of a method according to the invention to prepare a communication session between a first subscriber 120 and a second subscriber 130 at least by selecting a network slice of a mobile communication 140 network to the first subscriber 120 for the communication session. For example, the first subscriber 120 may enter to a communication service, such as to a multiplayer computer game, with the terminal device and select another player, i.e. the second subscriber 130, for the gaming session with a predefined procedure. As a result of the selection of the second subscriber 130 the server device 110 receives 210 a request to establish the communication session between the first subscriber 120 and the second subscriber 130. The request carries data defining the communication session in a manner that the server device 110 is able to derive the entity executing the communication session. Additionally, the request carries data identifying the first and the second subscriber 120, 130 in a predefined manner, such as with a network identity, such as IMSI or any similar.

Next, the server device 110 executing the method generates 220, based on the data descriptive of the communication session received 210 in the request, a resource request to a network node 150 of the mobile communication network 140 to select a network slice for the first subscriber 120. This comprises that the server device 110 analysis the communication session to be established between the subscribers 120, 130, e.g. that it is a gaming session with predefined requirements and/or other data, such as available network resources in the location of at least one subscriber 120, 130 and so on, and includes data indicative of the resource requirements in the resource request to the network node 150 in order to cause the network node 150 to select a network slice of the mobile communication network 140 in accordance with the communication session.

In response to a receipt of data indicative of the network slice the server device 110 generates a message to the first subscriber 120 wherein the message comprises data indicating the network slice selected to the first subscriber 120 for the communication session with the second subscriber 130.

In some embodiments, the method may further comprise:
requesting, from another network node 160 of the mobile communication network 140, data descriptive of communication resources of the first subscriber 120 and the second subscriber 130 in response to the receipt of the request to establish the communication session between the first subscriber 120 and the second subscriber 130, and
generating, based on the data descriptive of the communication resources of the first subscriber 120 and the second subscriber 130, a request to the network node 150 to adjust communication policies of the first subscriber 120 and the second subscriber 130 to meet each other in a predefined accuracy for the communication session over the selected slice.

This refers to an approach in which the server device 110 may orchestrate the communication policies of the subscribers 120, 130 to meet each other in order to make the communication session, such as the gaming session, more independent on the communication resources of the subscription of the first subscriber 120 and the second subscriber. As a result, the user experience may be more even for both subscribers 120, 130. The communication policies may refer to subscriber-based definitions with respect to technical parameters defining a quality of service, QoS, for each subscription, such as parameters like bandwidth, latency, and so on.

Furthermore, the method may further comprise that the server device 110 receives data indicative of a termination of the communication session which may e.g. result that one of the subscribers 120, 130 has left the communication session (e.g. the game ended). In response to this the server device 110 may generate a further resource request to the network node 150 to return the communication policies of the first subscriber 120 and the second subscriber 130 to those that were active prior to the adjustment of the communication policies.

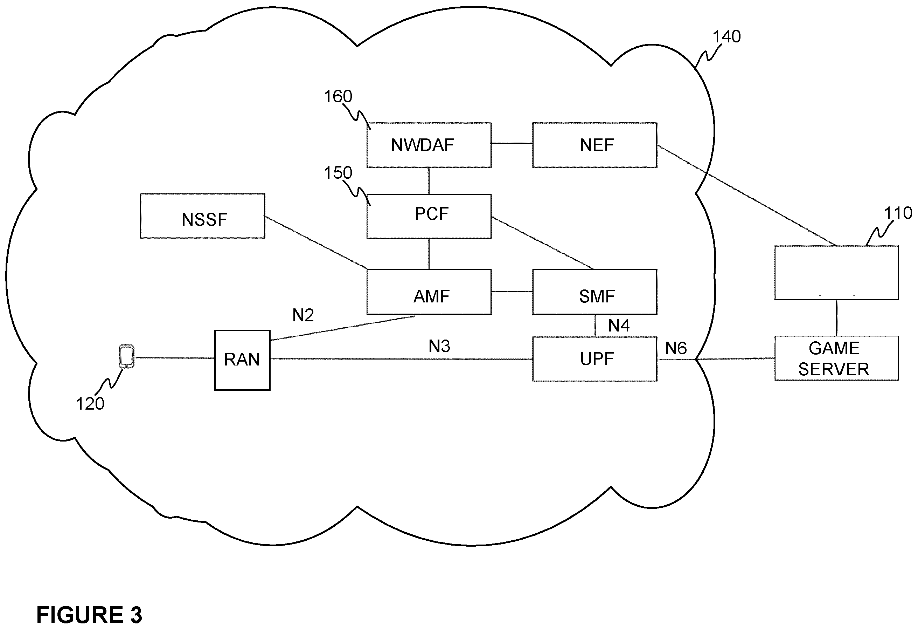

The invention is now described in further detail in a communication environment as shown in Figure 3 in which the communication session is a multiplayer gaming session. The communication environment is based on a 5G mobile communication network communicatively connected to the server device 110 configured to prepare the communication session as described as well as to a game server that is configured to implement the multiplayer computer game. The network nodes 150, 160 as discussed earlier correspond to PCF and NWDAF in the 5G mobile communication network. Generally speaking, the network architecture of the mobile communication network 140 corresponds to the network architecture of the 5G mobile communication network. Thus, the network node 150 implemented as the PCF in the 5G mobile communication network is handling at least the following functions:
- Slice selection
- DNN (5QI) selection
- User subscription related info, such as max allowed data rate
- UE Policy Delivery Service handling including
   - URSP parameters
   - ANDSP parameters

The network node 160 implemented as the NWDAF in the 5G mobile communication network is handling at least the following functions:
- Network slice instance load level computation and prediction
- Load analytics information and prediction for a specific NF
- Network performance computation and prediction
- Congestion information - current and predicted for a specific location
- Quality of service (QoS) reporting and predicting QoS change
- UE mobility analytics and expected behavior prediction
- UE abnormal behavior / anomaly detection
- UE communication analytics and pattern prediction
- Generic network related information, such which network technologies are available in the Location X.

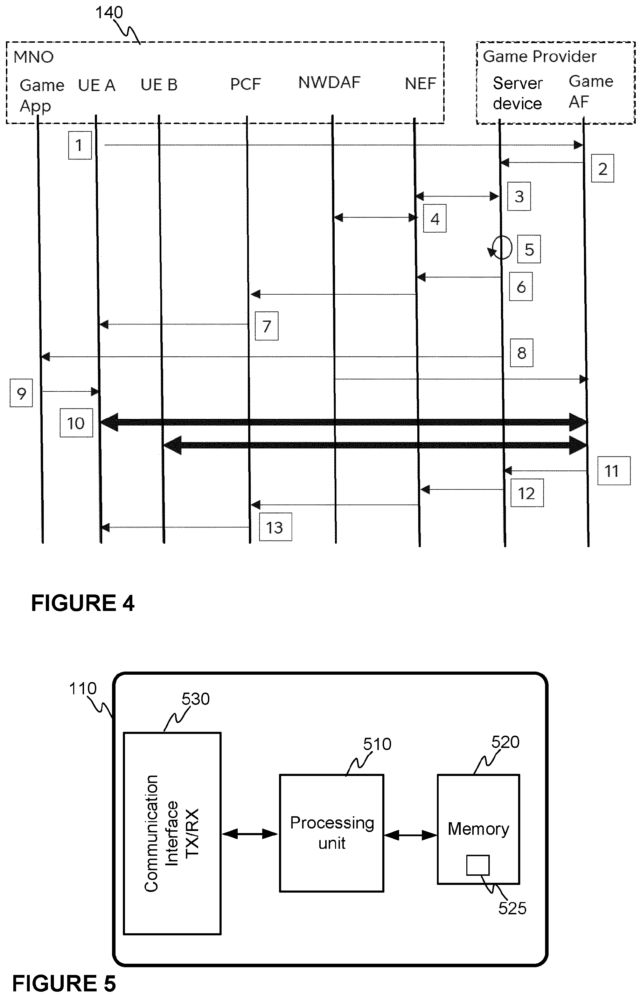

Figure 4 illustrates as a flow chart the method according to an embodiment of the invention in more detail in a context of gaming session as the communication session wherein the signaling disclosed in Figure 4 also covers signaling inside the mobile communication network 140. The first subscriber 120 is denoted with UE A in Figure 4 wherein the gaming application (Game App in Fig.4) is executed in the UE A (and UE B corresponding to the second subscriber 130). The server device 110 executing the method is shown to belong on the game provider side together with the game application function (denoted with Game AF in Figure 4). Hence, the flow chart may comprise the following steps:
1. User A decides to spend some time playing a game, he selects multiplayer Game XYZ in his terminal device UE A. Game XYZ connects to Game AF and provides the list of available players to play against right now, User A selects User B.
2. Game AF contacts server device 110 to set up the game in the most optimal way between User A and User B.
3. The server device 110 asks MNO to provide information on the location, network status etc. of User A and User B via NEF.
4. NEF forwards the request to NWDAF, which uses radio and core network elements to gather the necessary information and sends it back to NEF which sends it onwards to the server device 110.
5. The server device 110 analyses information it received.
6. Based on the analysis of the requested game, opponent, location and the available network resources server device 110 tells PCF via NEF to update URSP list on the UE with a particular slice identifier (NSSAI 123 for mid-tier gaming slice). The server device 110 also tells PCF to upgrade/downgrade User A and User B QoS policy so that they are aligned, if that is needed in addition to the slice selection.
7. PCF updates QoS policy for the users and sends updated URSP list to UE A.
8. The server device 110 informs (either directly or via Game AF) the actual Game application in the UE A that NSSAI 123 should be used for the next game.
9. Game app informs UE A to select NSSAI 123, which UE A then utilize as a part of slice reselection process towards radio & core network and is able to set up a user plane connection to Game AF.
10. Finally the Game app gets to connect User A and User B for the game session
11. Once the game is over, Game AF informs the server device 110.
12. The server device 110 then tells PCF to return the QoS policy of the participants as it was. The server device 110 also tells PCF to return URSP list in UE A as it was.
13. PCF updates URSP list, making UE A (and possibly also UE B) to disconnect from the slice used for the game.

Hence, it may be considered that the server device receives 210 the request to establish the communication session at least in the signaling denoted with 1 and 2 in Figure 4. The generation 220 of the resource request may be considered to correspond to signals denoted with 6 and 7 in Figure 4. The generation 230 of the message may, in turn, be considered to correspond to signaling denoted with 8 in Figure 4. The aspects by means of which information on the subscribers 120, 130 may be requested may correspond to signals denoted with 3 and 4 in Figure 4. The information on the adjustment of the communication resources may then be included in the signals denoted with 6 and 7 in Figure 4. The termination of the communication aspect may be achieved with signals denoted with 11, 12, 13 in Figure 4.

As becomes clear from above the server device 110 may be configured to handle aspects like:
- Session length
- Playtime per session
- Playtime per user
- Transactions per user
- Quality of service (QoS) reporting and predicting QoS change
- Latency reporting

For avoidance of doubt an example of a non-limiting apparatus suitable to implement the function of the server device 110 is schematically illustrated in Figure 5. In other words, the apparatus may be configured to implement at least part of the method as described. The execution of the respective method, or at least some portions of it, may be achieved by arranging a processing unit 510 comprising at least one processor to execute at least some portion of computer program code 525 stored in at least one memory 520 causing the processor 510, and, thus, the apparatus to implement the method steps as described in order to execute the function as described. In other words, the processing unit 510 may be arranged to access the memory 520 and to retrieve and to store any information therefrom and thereto. Moreover, the processing unit 510 may be configured to control a communication through one or more communication interfaces 530 for accessing the other entities being involved in the operation, such as the data storage and the other nodes/devices in a manner as described in the description herein. Hence, the communication interface 530 may be arranged to implement, possibly under control of the processing unit 510, a number of communication protocols, such as an IP or any other communication protocol, for communicating with one or more entities to receive input and to output data as described. The term communication interface 530 shall be understood in a broad manner comprising necessary hardware and software elements for implementing the communication techniques. Further, the apparatus in question may comprise one or more input/output devices for inputting and outputting information. In accordance with the present invention such input/output devices forming a user interface may at least comprise a touch screen, but may also comprise further entities, such as a physical keyboard, buttons, display, loudspeaker, microphone camera and so on. In some implementation of the apparatus at least some of the input/output devices may be external to the apparatus and coupled to it either wirelessly or in a wired manner. For sake of clarity, the processing unit 510 herein refers to any unit or a plurality of units suitable for processing information and control the operation of the apparatus in general at least in part, among other tasks. The mentioned operations may e.g. be implemented with a microcontroller solution with embedded software. Similarly, the invention is not limited to a certain type of memory 520, but any memory unit or a plurality of memory units suitable for storing the described pieces of information, such as portions of computer program code and/or parameters, may be applied in the context of the present invention. Moreover, at least the mentioned entities may be arranged to be at least communicatively coupled to each other with an internal data connection, such as with a data bus.

In some examples, the apparatus may be implemented with a distributed computing environment in which a plurality of computing devices is configured to cooperate to cause an execution of the method according to at least one of the examples as described. A non-limiting example of such a distributed computing system may be that a first apparatus is configured to perform one or more steps of the respective method, and a second apparatus, and any further apparatuses, in turn, may be configured to perform the remaining steps needed to complete operation as described.

As derivable from above, some aspects of the present invention may relate to a computer program product which, when executed by at least one processor, cause an apparatus to perform at least some portions of the method as described. For example, the computer program product may comprise at least one computer-readable non-transitory medium having the computer program code 525 stored thereon. The computer-readable non-transitory medium may comprise a memory device or a record medium such as a CD-ROM, a DVD, a Blu-ray disc, or another article of manufacture that tangibly embodies the computer program. As another example, the computer program may be provided as a signal configured to reliably transfer the computer program.

Still further, the computer program code 525 may comprise a proprietary application, such as computer program code for generating the data record in the manner as described.

The computer program code 525 may also be considered to include the definitions and instructions of an execution of the application of the data record in a further use.

The specific examples provided in the description given above should not be construed as limiting the applicability and/or the interpretation of the appended claims. Lists and groups of examples provided in the description given above are not exhaustive unless otherwise explicitly stated.

## Claims

1. A method for preparing a communication session between a first subscriber (120, 130) and a second subscriber (120, 130) at least by selecting a network slice of a mobile communication network (140) to the first subscriber (120, 130) for the communication session, the method, performed by a server device (110), comprises:
receiving (210) a request to establish the communication session between the first subscriber (120, 130) and the second subscriber (120, 130),
generating (220), based on data descriptive of the communication session, a resource request to a network node (150) of the mobile communication network (140) to select the network slice for the first subscriber (120, 130),
generating (230), in response to a receipt of data indicative of the network slice, a message to the first subscriber (120, 130), the message indicating the network slice selected to the first subscriber (120, 130) for the communication session with the second subscriber (120, 130).

2. The method according to claim 1, the method further comprises:
requesting, from another network node (160) of the mobile communication network (140), data descriptive of communication resources of the first subscriber (120, 130) and the second subscriber (120, 130) in response to the receipt of the request to establish the communication session between the first subscriber (120, 130) and the second subscriber (120, 130), and
generating, based on the data descriptive of the communication resources of the first subscriber (120, 130) and the second subscriber (120, 130), a request to the network node (150) to adjust communication policies of the first subscriber (120, 130) and the second subscriber (120, 130) to meet each other in a predefined accuracy for the communication session over the selected slice.

3. The method according to any of the preceding claims, the method further comprises:
receiving data indicative of a termination of the communication session,
generating a further request to the network node (150) to return the communication policies of the first subscriber (120, 130) and the second subscriber (120, 130) to those that were active prior to the adjustment of the communication policies.

4. A server device (110) configured to execute the steps of the method of any of the claims 1 to 3.

5. A computer program comprising instructions to cause the server device (110) of claim 4 to execute the steps of the method of any of the claims 1 to 3.
